# EUROPEAN PATENT APPLICATION

(11) **EP 4 836 160 A1**
(43) Date of publication of application: **04.11.2026**
(21) Application number: 26174406.4
(22) Date of filing: 24.04.2026
(51) Int. Cl.: H01M 50/403, H01M 50/417, H01M 50/426, H01M 50/446, H01M 50/491

(54) **METHOD OF MANUFACTURING SEPARATOR FOR RECHARGEABLE BATTERY, SEPARATOR FOR RECHARGEABLE BATTERY AND RECHARGEABLE LITHIUM BATTERY**

(30) Priority: 30.04.2025 KR 20250057450
(71) Applicant: SAMSUNG SDI CO., LTD., Yongin-si, Gyeonggi-do 17084 (KR)
(72) Inventor: KIM, Nam Ju, 16678 Suwon-si, Gyeonggi-do (KR); LEE, Jung Seong, 16678 Suwon-si, Gyeonggi-do (KR); CHOI, Hyeon Seon, 16678 Suwon-si, Gyeonggi-do (KR); LEE, Bae Wook, 16678 Suwon-si, Gyeonggi-do (KR); LEE, Jae Yeon, 16678 Suwon-si, Gyeonggi-do (KR); KIM, Jung Seob, 16678 Suwon-si, Gyeonggi-do (KR)
(74) Representative: Michalski Hüttermann & Partner mbB

(57) **Abstract**

The present disclosure relates to a method of manufacturing a separator for a rechargeable battery, a separator for a rechargeable battery, and a rechargeable battery. The manufacturing method includes applying a composition for a coating layer including a binder, a solvent, and a filler onto at least one surface of a porous substrate to form a coating film for a coating layer; and drying the coating film for a coating layer to manufacture a separator for a rechargeable battery. The drying includes drying the coating film for a coating layer in a first drying zone, and the first drying zone has a dew point in a range of about 10 °C to about 25 °C and a relative humidity in a range of about 20% to about 70%.

## Description

### CROSS-REFERENCE TO RELATED APPLICATION

The present application claims priority and the benefit of Korean Patent Application No. 10-2025-0057450, filed on April 30, 2025 in the Korean Intellectual Property Office.

### BACKGROUND

### 1. Field of the Disclosure

The present disclosure relates to a method of manufacturing a separator for a rechargeable battery, a separator for a rechargeable battery, and a rechargeable battery.

### 2. Discussion of Related Art

With increasing presence of electronic devices such as, e.g., mobile phones, notebook computers, electric vehicles, and the like, that use batteries, the demand for secondary batteries having high energy density and high capacity is increasing. Therefore, improving the performance of rechargeable lithium batteries may be advantageous.

A rechargeable lithium battery typically includes a positive electrode and a negative electrode that contain an active material capable of the intercalation and deintercalation of lithium ions, and produces electric energy by oxidation and reduction reactions when the lithium ions are intercalated into and deintercalated from the positive electrode and the negative electrode.

The rechargeable lithium battery may include a separator between the positive electrode and the negative electrode.

### SUMMARY

The present disclosure is directed to a separator for a rechargeable battery, the separator including a coating layer having a small average pore size and high porosity.

The present disclosure is also directed to a separator for a rechargeable battery, the separator having phase separation between a binder and a filler.

According to one aspect of the present disclosure, there is provided a method of manufacturing a separator for a rechargeable battery.

The method of manufacturing a separator for a rechargeable battery includes applying a composition for a coating layer including a binder, a solvent, and a filler onto at least one surface of a porous substrate to form a coating film for a coating layer; and drying the coating film for a coating layer to manufacture a separator for a rechargeable battery. The drying includes drying the coating film for a coating layer in a first drying zone, and the first drying zone has a dew point in a range of about 10 °C to about 25 °C and a relative humidity in a range of about 20% to about 70%.

According to another aspect of the present disclosure, there is provided a separator for a rechargeable battery.

The separator for a rechargeable battery includes a porous substrate and a coating layer laminated on at least one surface of the porous substrate, wherein the coating layer includes a binder and a filler and has an average pore size of more than about 10 nm, and about 50 nm or less, for example an average pore size of more than about 20 nm, and about 40 nm or less.

According to still another aspect of the present disclosure, there is provided a rechargeable battery.

The rechargeable battery includes a positive electrode, a negative electrode, and the above-described separator for a rechargeable battery located between the positive electrode and the negative electrode.

### BRIEF DESCRIPTION OF THE DRAWINGS

The above and other objects, features and advantages of the present disclosure may become more apparent to those of ordinary skill in the art by describing example embodiments thereof in detail with reference to the accompanying drawings, in which:
FIG. 1 is a conceptual diagram of a coating layer of a separator according to a coating layer preparation method;
FIG. 2 shows the phase separation between a binder and a filler in a coating film for a coating layer in a separator manufacturing method;
FIG. 3 is a cross-sectional view of a separator for a rechargeable battery according to one example embodiment;
FIG. 4 to FIG. 7 are cross-sectional views schematically illustrating a rechargeable lithium battery according to one example embodiment;
FIG. 8 shows the scanning electron microscope (SEM) results of a coating layer of a separator of Example 1; and
FIG. 9 shows the SEM results of a coating layer of a separator of Comparative Example 4.
FIG. 10 is a flowchart illustrating a method of manufacturing a separator for a rechargeable battery, according to an example embodiment.

### DETAILED DESCRIPTION

Hereinafter, example embodiments of the present disclosure are described in detail. However, the example embodiments are provided as examples, the present disclosure is not limited thereto, and the present disclosure is only defined by the scope of the claims to be described below.

Hereinafter, example embodiments of the present disclosure are described in detail with reference to the attached drawings. Terms or words used in this specification and claims should not be interpreted as limited to their typical or dictionary meanings, but should be interpreted with meanings and concepts that conform to the technical idea of the present disclosure. Therefore, it should be understood that the example embodiments described in this specification and the configurations illustrated in the drawings are only some of the example embodiments of the present disclosure and do not represent all of the technical idea of the present disclosure, and various equivalents and modifications may exist at the time of filing this application. In addition, when used in this specification, "comprise" and "include" and/or "comprising" specify the presence of mentioned shapes, numbers, steps, operations, elements, components and/or groups thereof, and do not exclude the presence or addition of one or more other shapes, numbers, operations, elements, components and/or groups. Additionally, when describing example embodiments of the present disclosure, the phrase "may be" may include "one or more example embodiments of the present disclosure."

Furthermore, to aid understanding of the disclosure, the attached drawings may not be drawn to scale, but rather, the dimensions of some components may be exaggerated. Furthermore, the same reference numbers may be assigned to the same components in different embodiments.

Unless otherwise specified herein, when a part such as a layer, film, region, plate, and the like, is described as being "on" another part, it includes not only the case where the part is "directly on" the other part, but also the case where there is still another part therebetween.

Unless otherwise specified in this specification, anything indicated in the singular may also include the plural. Further, unless otherwise stated, "A or B" may mean "including A, including B, or including A and B."

As used herein, the term "a combination thereof" may mean a mixture, laminate, composite, copolymer, alloy, blend, and reaction product of the components.

Here, the term "particle diameter D50" refers to the average particle diameter, which means the diameter of particles with a cumulative volume of 50% by volume in the particle size distribution. The particle size distribution may be measured by methods well known to those skilled in the art. For example, the particle size distribution may be measured using, e.g., a particle size analyzer, a transmission electron micrograph, or a scanning electron micrograph. In another method, an D50 value may be obtained by measuring the particle diameter using, e.g., a measuring device using dynamic light scattering, performing data analysis to count the number of particles for each particle size range, and then calculating the particle diameter therefrom. Alternatively, D50 may be measured using a laser diffraction method. For example, when measuring by laser diffraction, after the particles to be measured are dispersed in a dispersion medium, the particles may be introduced into a commercially available laser diffraction particle diameter measuring device (e.g., Microtrac MT 3000) and irradiated with ultrasonic waves of about 28 kHz at an output of about 60 W, and the D50 based on 50% of the particle diameter distribution in the measurement device may be calculated.

When the terms "about" or "substantially" are used in this specification in connection with a numerical value, it is intended that the associated numerical value include a tolerance of +10% around the stated numerical value. When ranges are specified, the range includes all values therebetween such as increments of 0.1%.

According to one example embodiment, a method of manufacturing a separator for a rechargeable battery, a separator for a rechargeable battery, and a rechargeable battery are provided.

According to one example embodiment, the separator for a rechargeable battery may be used in a rechargeable lithium battery. However, the present disclosure is not limited thereto, and the separator may also be applied to rechargeable metal batteries such as, e.g., a rechargeable sodium battery and the like in addition to a rechargeable lithium battery.

According to one example embodiment, the method of manufacturing a separator for a rechargeable battery includes applying a composition for a coating layer including a binder, a solvent, and a filler onto at least one surface of a porous substrate to form a coating film for a coating layer; and drying the coating film for a coating layer to manufacture a separator for a rechargeable battery. For example, the drying includes drying the coating film for a coating layer in a first drying zone, and the first drying zone has a dew point in a range of about 10 °C to about 25 °C and a relative humidity in a range of about 20% to about 70%.

The manufacturing method can manufacture a separator for a rechargeable battery, which includes a porous substrate and a coating layer formed on at least one surface of the porous substrate, wherein the coating layer includes a binder and a filler and has a small average pore size and high porosity, and the binder and the filler are phase-separated in the coating layer.

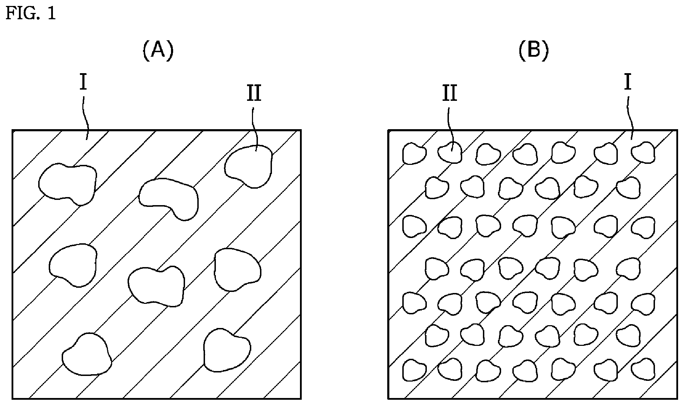

The average pore size and porosity are described with reference to FIG. 1.

FIG. 1A is a conceptual diagram of a coating layer of a separator for a rechargeable battery, which is not manufactured by the above-described manufacturing method. FIG. 1B is a conceptual diagram of a coating layer of a separator for a rechargeable battery, which is manufactured by the above-described manufacturing method.

Referring to FIG. 1, FIGS. 1A and 1B show that pores (II) are distributed in a matrix (I) of a coating layer. FIG. 1A shows that the size of pores (II) is large and porosity is low, whereas FIG. 1B shows that the size of pores (II) is small and porosity is high.

According to one example embodiment, the manufacturing method can manufacture a separator for a rechargeable battery, which includes a coating layer having a small pore size (accordingly, a small average pore size) and high porosity as shown in FIG. 1B. When the pore size in a coating layer is small and the porosity is high, an effect of improving the air permeability of a separator and decreasing membrane resistance is provided, and thus the safety of a battery can be enhanced.

In the present specification, a "pore size" may be determined by measuring a coating layer by a pore size analyzer (Porometer) using advanced capillary flow porometry to determine through-pore characteristics, including pore size distribution, e.g., a PMI method.

The present specification, an "average pore size" may be determined by measuring a coating layer by a PMI method.

The present specification, "porosity" may be determined by measuring a coating layer by a PMI method.

The PMI measurement method is as follows:
1) Install an accessory for measuring a binder on a device.
2) Turn on equipment and PC (for equipment, set the power switch to On).
3) Open the valve of the nitrogen line on the back of the equipment to supply nitrogen to the inside of the device (appropriate pressure: 0.15 MPa).
4) Click HorizonMB on the PC to run the software and then allow the equipment to stabilize (at least 1 hour).
5) Check whether the settings are correctly set before measurement.
   (Resolution: 8, Scans: 32, Acquisition mode: Absorbance, Detector gain: 237.84 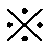 After selection, check whether the signal strength ranges from 20 to 80).
6) Move the fixture to the side in a state where a sample is absent on a sample holder, and then press the Reference button to start measurement.
7) Enter the sample name to be measured and storage path (Sample information)
8) Place the sample on the sample holder and press the Measure button to start measurement.
9) After the completion of measurement, obtain absorbance in the desired region.

The desired region can be selected by selecting Mathematics → Baseline Calculate. For the C-F bond, a range of 995 cm⁻¹ to 1330 cm⁻¹ is input as a base line and then the Calculate button is pressed to obtain a graph changed based on the 995 cm⁻¹ to 1330 cm⁻¹ region. The absorbance value can be confirmed by enlarging the graph and moving the mouse cursor near 1184 cm⁻¹.

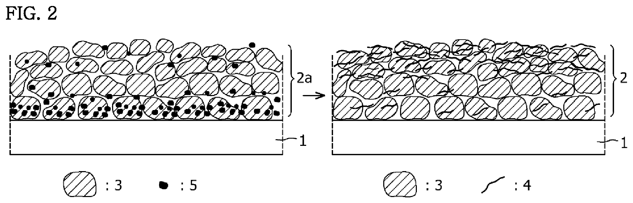

Next, the phase separation between the binder and the filler in the coating film for a coating layer in the manufacturing method according to one example embodiment is described with reference to FIG. 2.

Referring to FIG. 2, the application may form a coating film 2a for a coating layer including a binder 5, a solvent (not shown in FIG. 2), and a filler 3 on one surface of a porous substrate 1. FIG. 2 shows the case in which the binder 5 is in the form of particles. The binder 5 may be converted into the binder 4 by being dissolved in the solvent. However, the present disclosure is not limited thereto.

In the coating film 2a for a coating layer, the binder 5 and the filler 3 may be mixed with each other.

In one example, in the coating film 2a for a coating layer, the binder 5 may be included closer to the porous substrate 1 than the filler 3, and the filler 3 may be included farther from the porous substrate 1 than the binder 5. This may be the case when the size of the binder 5 is relatively smaller than the size of the filler 3, but the present disclosure is not limited thereto.

The drying of the coating film 2a for a coating layer may convert the coating film 2a into a coating layer 2.

The coating layer 2 includes a filler 3 and the binder 4. A large amount of the binder 4 may be included far from the porous substrate 1, and a relatively small amount thereof may be located close to the porous substrate 1. In the coating layer 2, as a relatively large amount of the binder 4 is located at the surface of the coating layer 2, the binder 4 may be phase-separated from the filler 3. Accordingly, the coating layer 2 may have high adhesion to an electrode and hinder or suppress a battery from being deformed during charging and discharging of the battery. Also, the coating layer 2 may provide an effect of improving short circuit defects and overcharging.

Hereinafter, the method of manufacturing a separator for a rechargeable battery according to one example embodiment is described in detail.

A composition for a coating layer including a binder, a solvent, and a filler is applied onto at least one surface of a porous substrate to form a coating film for a coating layer.

### Porous substrate

The porous substrate may have many pores and may be used in typical electrochemical devices. As a non-limiting example, the porous substrate may be or include a polymer film formed of or including any one polymer such as or including at least one of polyolefins such as polyethylene and polypropylene, polyesters such as polyethylene terephthalate and polybutylene terephthalate, polyacetal, polyamide, polyimide, polycarbonate, polyether ether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, Teflon, and polytetrafluoroethylene, or a copolymer or mixture of two or more thereof.

The porous substrate may be or include, for example, a polyolefin-based substrate including a polyolefin, and the polyolefin-based substrate may contribute to enhancing the safety of a battery due to its desired or improved shutdown function. The polyolefin-based substrate may be or include, for example, at least one of a polyethylene single-layer film, a polypropylene single-layer film, a polyethylene/polypropylene two-layer film, a polypropylene/polyethylene/polypropylene three-layer film, and a polyethylene/polypropylene/polyethylene three-layer film. Also, the polyolefin-based resin may include a non-olefin resin in addition to an olefin resin or may include a copolymer of olefin and non-olefin monomers.

The porous substrate may have a thickness in a range of about 1 µm to about 40 µm, for example, a thickness of 1 µm to 30 µm, 1 µm to 20 µm, or 3 µm to 10 µm.

### Binder

The binder may fix the filler in the coating layer and simultaneously or contemporaneously increase the adhesion of the coating layer. According to one example embodiment, the binder may be an adhesive binder.

The adhesive binder may be or include an organic adhesive binder. Here, the "organic adhesive binder" may refer to a binder that dissolves in an organic solvent. As described below, an organic solvent is used as a solvent in the manufacturing method. The organic adhesive binder may be readily dissolved in the organic solvent to facilitate the phase separation.

The organic adhesive binder may be or include a fluorine-based adhesive binder. The fluorine-based adhesive binder may facilitate an improvement in the dry adhesion and wet adhesion of the separator.

The fluorine-based adhesive binder may include a fluorine-based adhesive binder having a carboxylic acid group or a hydroxyl group. The fluorine-based adhesive binder having a carboxylic acid group or a hydroxyl group may improve the dry adhesion and wet adhesion of the separator.

The fluorine-based adhesive binder having a carboxylic acid group or a hydroxyl group may include a polyvinylidene fluoride (PVDF)-based binder having a carboxylic acid group or a hydroxyl group.

The PVDF-based binder may include, for example, a structural unit derived from vinylidene fluoride and a structural unit derived from a monomer having at least one carboxylic acid group or hydroxyl group. The structural unit derived from a monomer having at least one carboxylic acid group or hydroxyl group may provide the separator with improved wet adhesion, durability, and air permeability. The monomer having at least one carboxylic acid group or hydroxyl group may be or include one or more of (meth)acrylic acid, itaconic acid or a derivative thereof, maleic acid or a derivative thereof, and hydroxy alkane allyl ether.

The PVDF-based binder may further include a structural unit derived from a monomer copolymerizable with vinylidene fluoride. The copolymerizable monomer may be or include at least one or more of trichloroethylene, chlorotrifluoroethylene, trifluoroethylene, hexafluoropropylene, ethylene tetrafluoride, and ethylene monomers.

According to one example embodiment, the PVDF-based binder is or includes a copolymer of vinylidene fluoride, a monomer having a carboxylic acid group or a hydroxyl group, and hexafluoropropylene, and may include a structural unit derived from vinylidene fluoride, a structural unit derived from a monomer having a carboxylic acid group or a hydroxyl group, and a structural unit derived from hexafluoropropylene.

The PVDF-based binder having a carboxylic acid group or a hydroxyl group may have a glass transition temperature (Tg) in a range of about -70 °C to about -20 °C and a weight average molecular weight in a range of about 200,000 g/mol to about 3,000,000 g/mol, 200,000 to 2,000,000 g/mol, or 300,000 to 1,500,000 g/mol. Within the above ranges, the separator can have desired or improved adhesion.

The glass transition temperature may be measured by a typical method known to those skilled in the art using DSC. The weight average molecular weight may be obtained as a polystyrene-converted value through, e.g., gel permeation chromatography.

According to one example embodiment, the PVDF-based binder may include a range of about 80 mol% to about 99 mol% of vinylidene fluoride repeating units, a range of about 0.5 mol% to about 10 mol% of hexafluoropropylene repeating units, and a range of about 0.5 mol% to about 10 mol% of repeating units derived from the monomer having a carboxylic acid group or a hydroxyl group.

The PVDF-based binder may have various forms such as an alternating polymer in which the repeating units are alternatively distributed, a random polymer in which the repeating units are randomly distributed, and a graft polymer in which some of the repeating units are grafted. Also, the PVDF-based binder may be in the form of a linear polymer, a branched polymer, or a mixture thereof.

In one example, the PVDF-based binder may include the vinylidene fluoride repeating unit in an amount in a range of about 90 mol% to about 99.5 mol%, 93 mol% to 99 mol%, or 95 mol% to 99 mol% and the hexafluoropropylene repeating unit in an amount of more than about 0 mol% and about 10 mol% or less, in a range of about 0.5 mol% to about 10 mol%, 1 mol% to 10 mol%, 1 mol% to 9 mol%, 2 mol% to 7 mol%, or 4 mol% to 6 mol%. Within the above ranges, the PVDF-based binder can exhibit desired or improved solubility in a low-boiling-point solvent, secure chemical stability, and have desired or improved adhesion. Accordingly, an adhesive layer can be formed using a low-boiling-point solvent without any additional process, and degradation of air permeability, which may unavoidably occur by using a high-boiling-point solvent, can be reduced or prevented. The low-boiling-point solvent is described below in detail.

The PVDF-based binder having a carboxylic acid group or a hydroxyl group may have a degree of crystallinity in a range of about 40% to about 65%, for example, 45% to 60% or 50% to 55%. In this case, the binder can exhibit desired or improved adhesion. The degree of crystallinity of the PVDF-based binder is higher than the degree of crystallinity of the fluorine-based adhesive binder not having a carboxylic acid group and a hydroxyl group to be described below.

The PVDF-based binder having a carboxylic acid group or a hydroxyl group may have a melting point of about 150 °C or higher, for example, in a range of about 150 °C to about 200 °C.

The adhesive binder is an organic adhesive binder and may further include a fluorine-based adhesive binder not having a carboxylic acid group and a hydroxyl group. The fluorine-based adhesive binder not having a carboxylic acid group and a hydroxyl group may improve the adhesion of an adhesive layer.

The fluorine-based adhesive binder not having a carboxylic acid group and a hydroxyl group may include a repeating unit derived from vinylidene fluoride and a repeating unit derived from a monomer copolymerizable with vinylidene fluoride. The copolymerizable monomer may be or include at least one or more of trichloroethylene, chlorotrifluoroethylene, trifluoroethylene, hexafluoropropylene, ethylene tetrafluoride, and ethylene monomers.

The fluorine-based adhesive binder not having a carboxylic acid group and a hydroxyl group may have various forms such as an alternating polymer, a random polymer, and a graft polymer. The fluorine-based adhesive binder not having a carboxylic acid group and a hydroxyl group may be in the form of a linear polymer, a branched polymer, or a mixture thereof, and may be or include a polymer having more branched chains than the fluorine-based adhesive binder having a carboxylic acid group and a hydroxyl group.

The fluorine-based adhesive binder not having a carboxylic acid group and a hydroxyl group may include a vinylidene fluoride repeating unit and a hexafluoropropylene repeating unit.

The vinylidene fluoride repeating unit may be included in an amount in a range of about 90 mol% to about 99.5 mol%, 93 mol% to 99 mol%, or 95 mol% to 99 mol% in the binder. When the vinylidene fluoride repeating unit is included within the above range, the binder can secure desired or improved adhesion and electrolyte absorption. The hexafluoropropylene repeating unit may be included in an amount of more than about 0 mol% and about 10 mol% or less, in a range of about 0.5 mol% to about 10 mol%, 1 mol% to 9 mol%, 2 mol% to 8 mol%, 3 mol% to 7 mol%, or 4 mol% to 6 mol% in the binder. When the hexafluoropropylene repeating unit is included within the above range, the binder can secure chemical stability while exhibiting desired or improved solubility in a low-boiling-point solvent, and exhibit desired or improved adhesion. Accordingly, an adhesive layer can be formed using a low-boiling-point solvent without any additional process, and degradation of air permeability, which may unavoidably occur by using a high-boiling-point solvent, can be reduced or prevented.

The fluorine-based adhesive binder not having a carboxylic acid group and a hydroxyl group may have a glass transition temperature (Tg) in a range of about -70 °C to about 20 °C and a weight average molecular weight in a range of about 800,000 to about 2,000,000, or 800,000 to 1,900,000. When the weight average molecular weight falls within the above range, an adhesive layer including this binder can exhibit desired or improved wet adhesion and dry adhesion.

The binder may have a degree of crystallinity in a range of about 35% to about 45%, for example, 35% to 40%. When the binder has a degree of crystallinity within the above range, an adhesive layer including this binder can exhibit desired or improved dry adhesion. The degree of crystallinity of this binder is lower than the degree of crystallinity of the fluorine-based adhesive binder having a hydroxyl group or a carboxylic acid group.

The fluorine-based adhesive binder not having a carboxylic acid group and a hydroxyl group may have a melting point of about 150 °C or higher, for example, in a range of about 150 °C to about 200 °C.

Both of the two types of binders may be prepared by various known methods such as, e.g., emulsion polymerization, suspension polymerization, bulk polymerization, and solution polymerization, and may be prepared, for example, by emulsion polymerization.

### Filler

The filler may have an average particle diameter D50 of about 1.0 µm or less, for example, about 0.4 µm or less, or in a range of about 0.1 µm to about 0.35 µm. Within the above range, an effect of improving a heat shrinkage rate can be achieved.

The filler may be or include, for example, an inorganic filler, an organic filler, an organic/inorganic composite filler, or a combination thereof. The inorganic filler may be or include a ceramic material that is capable of improving heat resistance. The inorganic filler may be or include, for example, at least one of a metal oxide, a metalloid oxide, a metal fluoride, a metal hydroxide, or a combination thereof. The inorganic filler may include, for example, at least one of alumina (Al₂O₃), SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but is not limited thereto. The organic filler may include at least one of an acryl compound, an imide compound, an amide compound, or a combination thereof, but is not limited thereto. The organic filler may have a core-shell structure, but is not limited thereto.

In one example, the filler may be alumina.

The filler may be spherical, platy, cubic, or amorphous. For example, the filler may be platy.

### Solvent

The solvent may allow the composition for a coating layer to be readily applied onto at least one surface of the porous substrate by mixing the binder and the filler.

In one example, the solvent may be a low-boiling-point solvent. The low-boiling-point solvent may be, for example, a solvent having a boiling point of 100 °C or lower. Since the low-boiling-point solvent is readily removed by volatilization during the drying, the air permeability of the separator may be hindered or prevented from increasing. For example, the solvent may have a boiling point of higher than 0 °C and 100 °C or lower, for example, 5, 10, 15, 20, 25, 30, 35, 40, 45, 50, 55, 60, 65, 70, 75, 80, 85, 90, 95, 100 °C, 10 °C to 100 °C.

Boiling point was measured by distillation method or computer based laboratory method.

The low-boiling-point solvent may be or include, for example, at least one of acetone, ethyl alcohol, methyl ethyl ketone, ethyl isobutyl ketone, tetrahydrofuran, dimethylformaldehyde, cyclohexane, or a mixed solvent thereof, but is not limited thereto.

### Composition for coating layer

The composition for a coating layer may include the binder, the filler, and the solvent.

In one example, the binder and the filler may be included in a weight ratio of about 1:10 to about 1:50, for example, in a weight ratio of about 1:20 to about 1:50 in the composition for a coating layer. Within the above range, phase separation in a coating layer, separator adhesion, and membrane resistance can be readily improved.

In one example, the solvent may be included in an amount of 100 to 500 parts by weight, for example, 100, 150, 200, 250, 300, 350, 400, 450, 500 parts by weight, 200 to 500 parts by weight with respect to 100 parts by weight of the binder. Within the above range, a coating layer can have a uniform surface, and phase separation in a coating layer can be readily improved.

### Formation of coating film for coating layer

A coating film for a coating layer may be formed by applying the composition for a coating layer onto at least one surface of the porous substrate. In the application, a typical method known to those skilled in the art may be used. For example, the application may be performed by die coating, but is not limited thereto.

The coating film for a coating layer may have a thickness of 1 to 20 µm, for example, 1 to 10 µm, 1 to 3 µm. Within the above range, the thickness of a coating layer to be described below can be readily achieved by drying.

### Drying

### Drying in first drying zone

The coating film for a coating layer is dried to form a coating layer on at least one surface of the porous substrate, thereby manufacturing a separator.

The drying includes drying the coating film by passing the laminate of the porous substrate and the coating film for a coating layer through a first drying zone.

The first drying zone is a zone in which the coating film for a coating layer is dried for the first time. In the first drying zone, although the solvent in the coating film for a coating layer is relatively less volatilized, phase separation between the filler and the binder in the coating film for a coating layer may be promoted.

The first drying zone has a dew point of 10 to 25 °C and a relative humidity of 20 to 70%. When the first drying zone satisfies both the above-described dew point and relative humidity, the above-described pore size, porosity, and phase separation can be readily achieved. The dew point and relative humidity appropriately provide humidification conditions during the drying of the coating film for a coating layer, and accordingly, the above-described pore size, porosity, and phase separation are expected to be readily achieved, but the present disclosure is not limited thereto.

When the first drying zone has a dew point of lower than 10 °C, there may be problems such as high air permeability and high resistance.

When the first drying zone has a dew point of higher than 25 °C, there may be problems such as low substrate bonding strength and low adhesion.

When the first drying zone has a relative humidity of less than 20%, there may be problems such as high air permeability and high resistance.

When the first drying zone has a relative humidity of more than 70%, there may be problems such as low substrate bonding strength and low adhesion.

In one example, the first drying zone may have a dew point of 10 to 20 °C, for example, 10, 11, 12, 13, 14, 15, 16, 17, 18, 19, 20, 21, 22, 23, 24, 25 °C, 10 to 18 °C or 12 to 18 °C.

In one example, the first drying zone may have a relative humidity of 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70%, 20 to 60%, for example, 20 to 50% or 25 to 45%.

The dew point and relative humidity of the first drying zone may be controlled by an air handling unit (AHU) and an outdoor air control unit (OAC) connected to the first drying zone. The control of the dew point and relative humidity by the AHU and OAC may be performed through temperature and relative humidity control known to those skilled in the art.

Here, the "dew point" and "relative humidity" may be measured in the first drying zone by a typical method. The dew point was measured by ASTM D1142 standard. The relative humidity was measured by using psychrometer or dew point hydrometer (the ratio (%) of actual amount water vapor to the saturated or maximum amount of water vapor).

The first drying zone may have a moisture content of 10 to 35 g/m³. Within the above range, the above-described pore size, porosity, and phase separation can be readily achieved. For example, the first drying zone may have a moisture content of 10, 11, 12, 13, 14, 15, 16, 17, 18, 19, 20, 21, 22, 23, 24, 25, 26, 27, 28, 29, 30, 31, 32, 33, 34, 35 g/m³ 10 to 25 g/m³, 10 to 20 g/m³, or 15 to 20 g/m³.

Here, the "moisture content" may be measured by reverse calculations using the following equation: 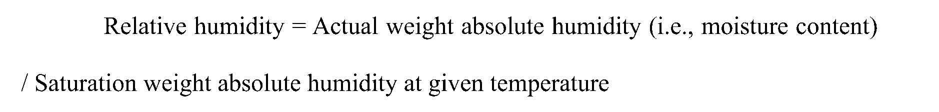 Relative humidity = Actual weight absolute humidity (i.e., moisture content) / Saturation weight absolute humidity at given temperature

Saturation weight absolute humidity at a dew point = Actual weight absolute humidity (i.e., moisture content).

The first drying zone may have an internal temperature of 40 to 100 °C, for example, 40 45, 50, 55, 60, 65, 70, 75, 80, 85, 90, 95, 100 °C, 50 to 80 °C, 50 to 70 °C, 50 to 60 °C, or 60 to 65 °C. Within the above range, the coating film for a coating layer can be readily dried.

In the first drying zone, the laminate of the coating film for a coating layer and the porous substrate may move at a movement speed (line speed) of 20 to 150 mpm, for example, 20, 25, 30, 35, 40, 45, 50, 55, 60, 65, 70, 75, 80, 85, 90, 95, 100, 105, 110, 115, 120, 125, 130, 135, 140, 145, 150 mpm, 20 to 120 mpm, 60 to 80 meters per minute (mpm). Within the above range, the coating film for a coating layer can be readily dried.

### Additional drying

The drying may further include drying the coating film for a coating layer in an additional drying zone in addition to the first drying zone. In the additional drying zone, the solvent in the coating film for a coating layer may be volatilized to remove the solvent in a coating layer and to increase the strength of a coating layer.

The number of additional drying zones may be 2 or more, for example, 4 or more.

In one example, the additional drying zone may include a second drying zone connected to the first drying zone, a third drying zone connected to the second drying zone, a fourth drying zone connected to the third drying zone, and a fifth drying zone connected to the fourth drying zone.

Each drying temperature in the second drying zone, the third drying zone, the fourth drying zone, and the fifth drying zone may be controlled according to the boiling point of the solvent included in the composition for a coating layer. For example, each drying temperature in the second drying zone, the third drying zone, the fourth drying zone, and the fifth drying zone may be the same or different and may be, for example, 40, 45, 50, 55, 60, 65, 70, 75, 80, 85, 90, 95, 100 °C, 40 to 100 °C or 50 to 80 °C.

Hereinafter, a separator for a rechargeable battery according to one example embodiment is described.

The separator for a rechargeable battery includes a porous substrate and a coating layer laminated on at least one surface of the porous substrate, and the coating layer includes a binder and a filler.

The porous substrate, the binder, and the filler are substantially the same as described above.

The coating layer has an average pore size of more than 0 nm and 50 nm or less, for example, an average pore size of more than 10 nm and 50 nm or less, or an average pore size of more than 20 nm and 40 nm or less.

Within the above average pore size range, the air permeability of the separator is hindered or prevented from increasing, surface roughness is low, and thus the safety of a battery can be enhanced. For example, the coating layer may have an average pore size of 5 to 50 nm, 10 to 50 nm, or 20 to 40 nm.

In one example, the coating layer may have a surface roughness Ra of 0.15 µm or less, for example, 0.01 to 0.15 µm, 0.05 to 0.15 µm, or 0.1 to 0.15 µm. Within the above range, the safety of a battery can be enhanced.

In one example, the separator may have an air permeability of 180 sec/100 cc or less, for example, 140 sec/100 cc or less. Within the above range, resistance can be hindered or prevented from being increased during the operation of a battery.

The coating layer may have a thickness of 0.5 to 3.0 µm, for example, 0.5 to 1.5 µm. Within the above range, the coating layer can be used in the separator.

Within the membrane resistance range, the lifespan of a battery can be improved without a decrease in battery capacity. For example, the separator may have a membrane resistance of 1 Ω or less (for example, 0.8 Ω or less).

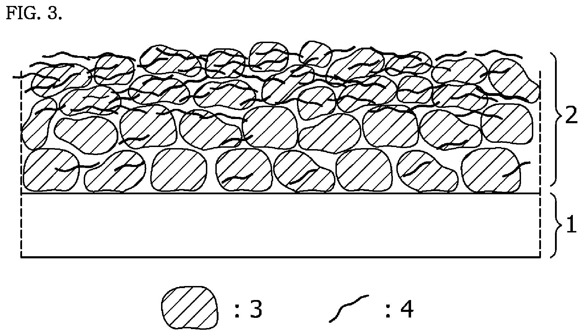

FIG. 3 is a cross-sectional view of the separator for a rechargeable battery according to one example embodiment.

Referring to FIG. 3, the separator for a rechargeable battery includes a porous substrate 1 and a coating layer 2 laminated on one surface of the porous substrate 1, and the coating layer 2 includes a filler 3 and a binder 4. In the coating layer 2, a large amount of the binder 4 may be included far from the porous substrate 1, and a relatively small amount thereof may be included close to the porous substrate 1. In the coating layer 2, as a relatively large amount of the binder 4 is located at the surface of the coating layer 2, the binder 4 may be phase-separated from the filler 3.

Therefore, both the dry adhesion and wet adhesion of the separator may increase.

In one example, the separator may have a dry adhesion of 1.5 gf/mm or more, for example, 1.5 to 3 gf/mm, and a wet adhesion of 0.5 gf/mm or more, for example, 0.5 to 2.5 gf/mm.

In one example, the separator may be manufactured by the method of manufacturing a separator for a rechargeable battery according to one example embodiment.

### Rechargeable lithium battery

According to one example embodiment, the rechargeable lithium battery includes the separator for a rechargeable lithium battery; a positive electrode; and a negative electrode.

The separator for rechargeable lithium battery refers to the description described above. The separator for rechargeable lithium battery may be positioned between the positive electrode and the negative electrode.

### Positive electrode

A positive electrode for a rechargeable lithium battery may include a current collector and a positive electrode active material layer on the current collector. The positive electrode active material layer may include a positive electrode active material and may further include a binder and/or a conductive material. For example, the positive electrode may further include an additive that can constitute a sacrificial positive electrode.

### Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤ 1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCOG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol%, and less than or equal to about 99 mol% based on 100 mol% of the metal excluding lithium in the lithium transition metal composite oxide. The high-nickel-based positive electrode active material may be capable of realizing high capacity, and can be applied to a high-capacity, high-density rechargeable lithium battery.

An amount of the positive electrode active material may be in a range of about 90 wt% to about 99.5 wt% based on 100 wt% of the positive electrode active material layer. Amounts of each of the binder and the conductive material may independently be in a range of about 0.5 wt% to about 5 wt%, respectively, based on 100 wt% of the positive electrode active material layer.

The binder attaches the positive electrode active material particles to each other, and also attaches the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause an adverse chemical change (e.g., that does not cause an undesirable chemical change in the rechargeable lithium battery) and that conducts electrons can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

Al may be used as the current collector, but the current collector is not limited thereto.

### Negative electrode

The negative electrode for a rechargeable lithium battery may include a current collector, and a negative electrode active material layer on the current collector. The negative electrode active material layer may include a negative electrode active material, and may further include a binder and/or a conductive material (e.g., an electrically conductive material).

For example, the negative electrode active material layer may include a range of about 90 wt% to about 99 wt% of the negative electrode active material, a range of about 0.5 wt% to about 5 wt% of the binder, and a range of about 0 wt% to about 5 wt% of the conductive material.

### Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x < 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

The binder may attach the negative electrode active material particles to each other, and may also attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause an adverse chemical change (e.g., that does not cause an undesirable chemical change in the rechargeable lithium battery) and that conducts electrons can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

### Electrolyte Solution

The electrolyte solution for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed together, and the cyclic carbonate and the chain carbonate may be mixed in a volume ratio in a range of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on their shape.

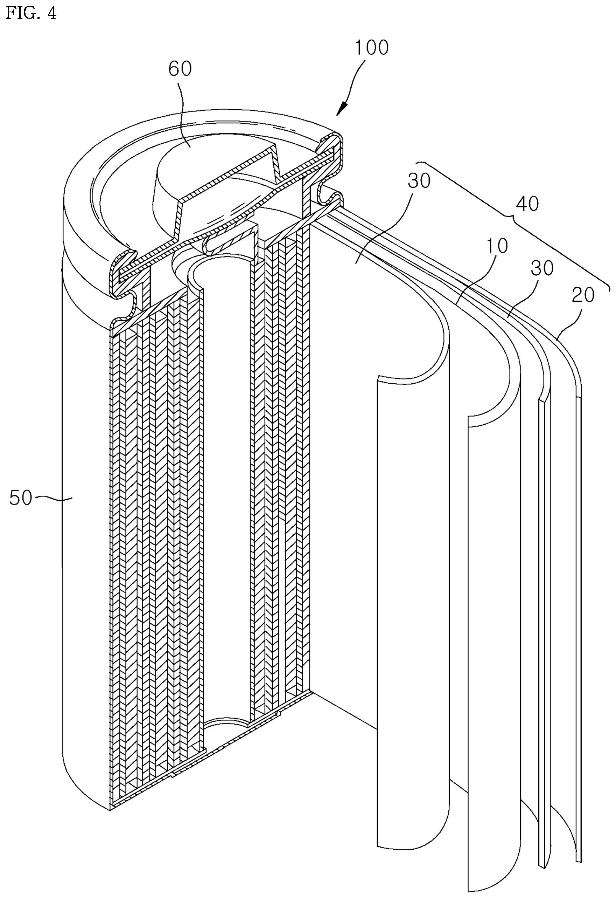

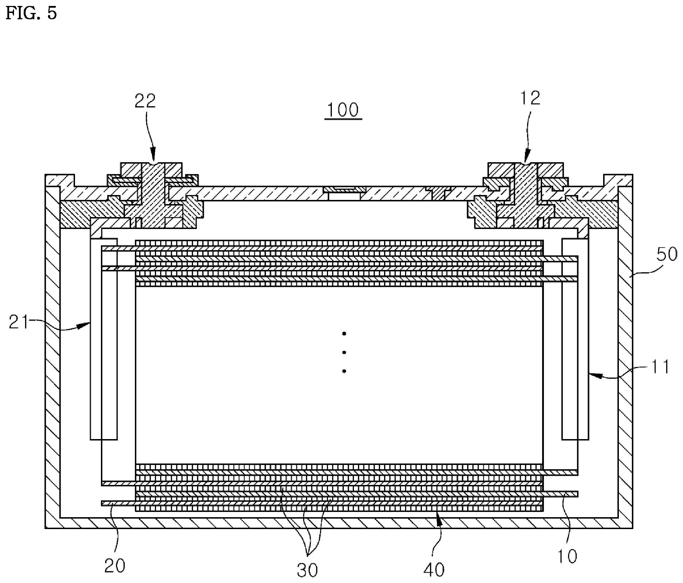

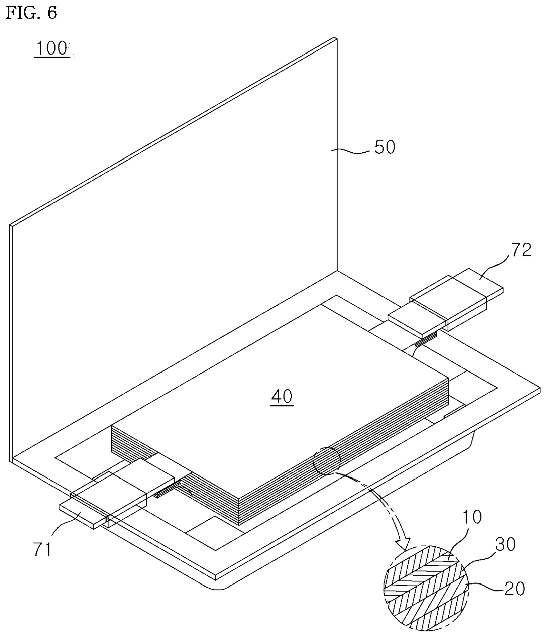

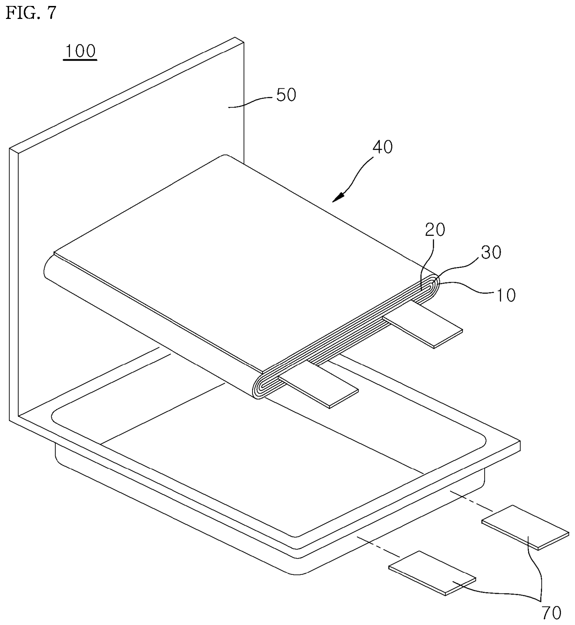

FIG. 4 to FIG. 7 are schematic views illustrating a rechargeable lithium battery according to an example embodiment. FIG. 4 shows a cylindrical battery, FIG. 5 shows a prismatic battery, and FIG. 6 and FIG. 7 show pouch-type batteries. Referring to FIG. 4 to FIG. 7, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 4. In FIG. 5, the rechargeable lithium battery 100 may include a positive lead tab 11, a positive terminal 12 connected to the positive lead tab 11, a negative lead tab 21, and a negative terminal 22 connected to the negative lead tab 21. As shown in FIG. 6 and FIG. 7, the rechargeable lithium battery 100 may include an electrode tab 70 illustrated in FIG. 7, or, for example, a positive electrode tab 71 and a negative electrode tab 72 illustrated in FIG. 6, the electrode tabs 70/71/72 forming an electric path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

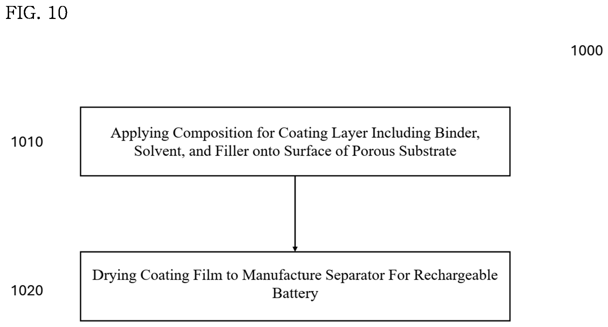

FIG. 10 is a flowchart illustrating a method of manufacturing a separator for a rechargeable battery, according to an example embodiment. In FIG. 10, the method 1000 includes operation 1010 which includes applying a composition for a coating layer including a binder, a solvent, and a filler onto at least one surface of a porous substrate to form a coating film for a coating layer. For example, a laminate of the coating film for a coating layer and the porous substrate moves at a movement speed in a range of about 50 mpm to about 150 mpm in the first drying zone. In another example, the binder includes an organic adhesive binder. For example, the organic adhesive binder includes a fluorine-based adhesive binder having a carboxylic acid group or a hydroxyl group. In a further example, the fluorine-based adhesive binder having a carboxylic acid group or a hydroxyl group includes a polyvinylidene fluoride (PVDF)-based binder having a carboxylic acid group or a hydroxyl group. In yet another example, the solvent has a boiling point of about 80 °C or lower. For example, the solvent includes at least one of acetone, ethyl alcohol, methyl ethyl ketone, ethyl isobutyl ketone, tetrahydrofuran, dimethylformaldehyde, cyclohexane, and a mixed solvent thereof. In another example, the filler includes alumina having an average particle diameter D50 of about 0.5 µm or less. In yet another example, the binder and the filler are included in a weight ratio in a range of about 1:10 to about 1:50 in the composition for a coating layer. For example, the solvent is included in an amount in a range of about 100 parts by weight to about 500 parts by weight with respect to 100 parts by weight of the binder.

Operation 1020 includes drying the coating film to manufacture a separator for a rechargeable battery. For example, the drying includes drying the coating film in a first drying zone, and the first drying zone has a dew point in a range of about 10 °C to about 25 °C and a relative humidity in a range of about 20% to about 70%. In another example, the first drying zone has a moisture content in a range of about 10 g/m³ to about 35 g/m³ and an internal temperature in a range of about 50 °C to about 100 °C. In a further example, the drying includes drying the coating film in an additional drying zone in addition to the first drying zone.

Hereinafter, examples and comparative examples of the present disclosure is described. However, the following examples are merely presented to exemplify the present disclosure, and the present disclosure is not limited to the following examples.

### Example 1

Alumina (particle diameter D50: 200 nm,) was used as a filler.

Polyvinylidene fluoride-hexafluoropropylene-based binder 75130 (weight average molecular weight: 1,300,000 g/mol, polyvinylidene fluoride: hexafluoropropylene molar ratio: 98:2, including acrylic acid as a monomer, glass transition temperature: -30 °C, melting point: 154 °C, degree of crystallinity: 53%) having a carboxylic acid group was used as a binder.

The filler and the polyvinylidene fluoride-hexafluoropropylene-based binder having a carboxylic acid group were mixed in acetone and stirred to prepare a composition for a coating layer.

In the composition for a coating layer, the polyvinylidene fluoride-hexafluoropropylene-based binder and the filler were included in a weight ratio of 1:20. In the composition for a coating layer, acetone was included in an amount of 300 parts by weight with respect to 100 parts by weight of the polyvinylidene fluoride-hexafluoropropylene-based binder.

The composition for a coating layer was applied onto one surface of a polyethylene-based film (thickness: 5.5 µm, commercially available from CZMZ, air permeability: 110 sec/100 cc, puncture strength: 360 kgf) as a porous substrate to prepare a coating film for a coating layer (thickness: 20 µm).

Drying was performed by passing the laminate of the porous substrate and the coating film for a coating layer through a first drying zone shown in Table 1 below.

Afterward, the laminate was sequentially passed through a second drying zone (drying temperature: 50 °C, drying time: 2 minutes), a third drying zone (drying temperature: 50 °C, drying time: 2 minutes), a fourth drying zone (drying temperature: 50 °C, drying time: 2 minutes), and a fifth drying zone (drying temperature: 50 °C, drying time: 2 minutes) to manufacture a separator.

### Examples 2 and 3

Separators were manufactured in the same manner as in Example 1, except that the dew point, relative humidity and moisture content of the first drying zone in Example 1 were changed as shown in Table 1 below.

### Comparative Examples 1 to 3 and 6

Separators were manufactured in the same manner as in Example 1, except that the dew point, relative humidity and moisture content of the first drying zone in Example 1 were changed as shown in Table 1 below.

### Comparative Examples 4 and 5

Separators were manufactured in the same manner as in Example 1, except that humidification conditions were not applied to the first drying zone.

The physical properties of the separators manufactured in the examples and comparative examples were evaluated as follows.

### Air permeability (units: sec/100 cc)

Air permeability was determined by measuring the time (units: sec) taken for 100 cc of air to pass through the separator using a measurement device and preferably a digital Oken-Type air-permeability tester (EG01-55-1MR commercially available from ASAHI SEIKO Co. Ltd.).

### Air permeability measurement device settings:

Measurement pressure: 0.5 kg/cm², cylinder pressure: 2.5 kg/cm², and set time: 10 seconds

### Membrane resistance (units: Ω)

Membrane resistance was evaluated by electrochemical impedance spectroscopy (EIS) resistance. Each separator manufactured in the examples and comparative examples was impregnated with an electrolyte (in which 1.5 M LiPF₆ was dissolved in a mixed solvent of ethylene carbonate, ethyl methyl carbonate, and dimethyl carbonate in a volume ratio of 2:1:7), fitted onto an aluminum foil electrode with a lead tab, and sealed in an aluminum pack to manufacture a test cell. The resistance (Ω) of the test cell was measured at 20 °C by an alternating current (AC) impedance method (measurement frequency: 100 kHz).

### Dry adhesion (units: gf/mm)

Each separator for a rechargeable lithium battery according to the examples and comparative examples was cut to a size of 3 cm×8 cm to prepare a sample.

97.4 wt% of artificial graphite as a negative electrode active material, 1.0 wt% of carboxymethyl cellulose, 1.5 wt% of styrene-butadiene-based rubber, and 0.1wt% of carbon nanotubes as a conductive material were mixed to prepare a negative electrode active material slurry. The prepared negative electrode slurry was applied onto copper foil, dried, and roll-pressed to manufacture a negative electrode.

The negative electrode and the separator were laminated and maintained under conditions of 40 °C and a 50 kg load for 2 hours. Afterward, the negative electrode and the separator were separated about 10 mm to 20 mm and fixed to a lower grip and an upper grip, respectively, so that the gap between the grips was 20 mm, and the separator was subjected to a tensile test at a speed of 100 mm/min in a 180° direction from the negative electrode. The force required to peel 40 mm was measured three times, and the arithmetic average value was obtained. Adhesion was measured using a universal testing machine (UTM).

### Binder distribution index_FT-IR:

Binder distribution index FT-IR was measured by the PMI method.

### Wet adhesion (units: gf/mm)

Each separator for a rechargeable lithium battery according to the examples and comparative examples was cut to a size of 3 cm×8 cm to prepare a sample.

97 wt% of a lithium nickel cobalt aluminum oxide as a positive electrode active material, 1.5 wt% of carbon nanotubes as a conductive material, and 1.5 wt% of polyvinylidene fluoride as a binder were mixed, and water was added to prepare a positive electrode slurry. The prepared positive electrode slurry was applied onto aluminum foil, dried, and roll-pressed to manufacture a positive electrode.

97.4 wt% of artificial graphite as a negative electrode active material, 1.0 wt% of carboxymethyl cellulose, 1.5 wt% of styrene-butadiene-based rubber, and 0.1 wt% of carbon nanotubes as a conductive material were mixed to prepare a negative electrode active material slurry. The prepared negative electrode slurry was applied onto copper foil, dried, and roll-pressed to manufacture a negative electrode.

One sheet of the sample was interposed between the positive electrode and the negative electrode, and the positive electrode-sample-negative electrode laminate was input into a pouch. 2.5 g of an electrolyte (in which 1.5 M LiPF₆ was dissolved in ethylene carbonate, ethyl methyl carbonate, and dimethyl carbonate (a volume ratio of 30:50:20)) was injected, and the pouch was sealed and allowed to stand at 25 °C for 12 hours. Afterward, the pouch was allowed to stand in a 50 °C chamber under a pressure of 200 kgf for 2 hours. The separator was separated in a range of about 10 mm to 20 mm from the negative electrode plate, and the separator and the negative electrode plate were fixed to an upper grip and a lower grip, respectively, so that the gap between the grips was 20 mm. Then, the separator was subjected to a tensile test in a 180° direction for peeling. In this case, a peeling speed was 20 mm/min, and after peeling started, the force required to peel 40 mm was measured three times, and the average value was obtained. The average value was calculated from the measured values. Adhesion was measured using an UTM.

### Average pore size (units: nm)

An average pore size was measured by the PMI method.

### Porosity (units: %)

Porosity was measured by the PMI method.

### Surface roughness Ra (units: µm)

The surface of the porous film was measured using a microscope commercially available from Olympus Corporation. The arithmetic average roughness (Ra) was obtained from the arithmetic average of the absolute vertical coordinates within the sampling length.

### SEM results

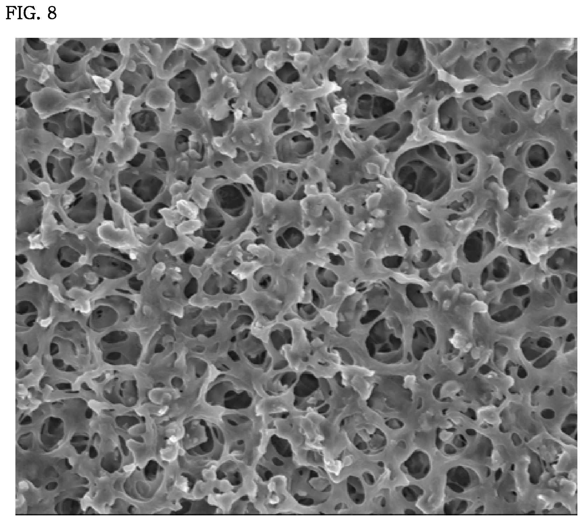

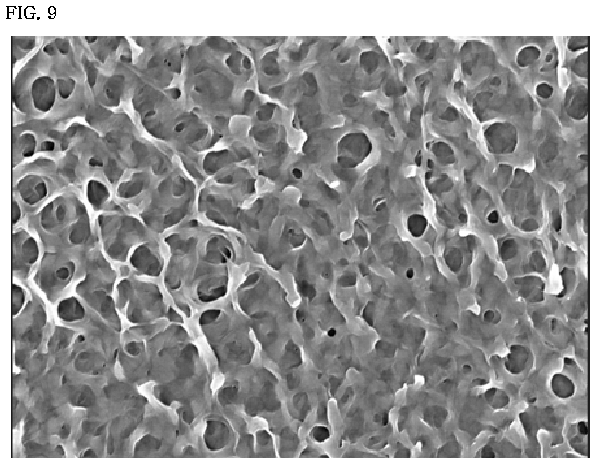

The surface of the coating layers according to Example 1 and Comparative Example 4 was measured using a scanning electron microscope (SEM). FIG. 8 shows the SEM results of Example 1, and FIG. 9 shows the SEM results of Comparative Example 4.

**Table 1:**

| Classification | | Examples | | | Comparative Examples | | | | | |
|---|---|---|---|---|---|---|---|---|---|---|
| | | 1 | 2 | 3 | 1 | 2 | 3 | 4 | 5 | 6 |
| First drying zone air supply/air conditioning conditions | Dew point | 15 | 10 | 25 | 10 | 25 | 35 | 5 | 3 | 5 |
| | Relative humidity | 40 | 30 | 70 | 10 | 80 | 100 | 10 | 10 | 40 |
| | Moisture content | 18 | 14 | 30 | 10.5 | 32 | 50 | 8 | 5 | 11 |
| First drying zone | Temperature | 60 | 60 | 60 | 60 | 60 | 60 | 60 | 60 | 60 |
| | Coating speed | 80 mpm | 80 mpm | 80 mpm | 80 mpm | 80 mpm | 80 mpm | 80 mpm | 80 mpm | 80 mpm |
| Air permeability | | 150 | 170 | 130 | 300 | 130 | 120 | 510 | 760 | 380 |
| Membrane resistance | | 0.78 | 0.88 | 0.68 | 2.3 | 1.6 | 2.0 | 4.5 | 6.0 | 2.5 |
| Dry adhesion | | 1.5 | 1.75 | 1.20 | 1.86 | 0.35 | 0.26 | 2.45 | 2.88 | 2.05 |
| Binder distribution index FT-IR | | 0.00825 | 0.00902 | 0.00860 | 0.0108 | 0.00435 | 0.00525 | 0.0135 | 0.0150 | 0.0125 |
| Wet adhesion | | 0.8 | 1.05 | 0.98 | 0.32 | 0.1 | 0.1 | 2.0 | 2.5 | 1.8 |
| Average pore size | | 38 | 32 | 34 | 22 | 41 | 38 | 15 | 10 | 20 |
| Porosity | | 35 | 32 | 38 | 28 | 39 | 42 | 15 | 10 | 25 |
| Surface roughness Ra | | 0.117 | 0.110 | 0.114 | 0.150 | 0.120 | 0.115 | 0.189 | 0.195 | 0.176 |

As shown in Table 1, the separators of the examples have a small average pore size, high porosity, and phase separation between the binder and the filler.

According to one example embodiment, a separator for a rechargeable battery enhances the safety of a battery by having a small average pore size and high porosity.

According to one example embodiment, a separator for a rechargeable battery, has high adhesion to an electrode, hinders or suppresses a battery from being deformed during charging and discharging of the battery, and provides an effect of improving short circuit defects and overcharging by including a coating layer having phase separation between a binder and a filler.

Example embodiments of the present disclosure have been described, but the present disclosure is not limited thereto. Various modifications may be carried out within the scope of the claims, the detailed description of the present disclosure, and the appended drawings, and are also included in the scope of the present disclosure.

## Claims

1. A method of manufacturing a separator (30) for a rechargeable battery (100), the method comprising:
generating a laminate by applying a composition for a coating layer (2) including a binder (4, 5), a solvent, and a filler (3) onto at least one surface of a porous substrate (1) to form a coating film (2a) for a coating layer (2); and
drying the coating film (2a) to manufacture a separator for a rechargeable battery,
wherein the drying includes exposing the laminate to a first drying zone, wherein the first drying zone has a dew point in a range of 10 °C to 25 °C and a relative humidity in a range of 20% to 70%.

2. The method of claim 1, wherein the first drying zone has a moisture content in a range of 10 g/m³ to 35 g/m³ and an internal temperature in a range of 50 °C to 100 °C.

3. The method according to any of the previous claims, wherein the laminate moves at a movement speed in a range of 50 meters per minute to 150 meters per minute in the first drying zone.

4. The method according to any of the previous claims, wherein the drying comprises exposing the laminate to an additional drying zone in addition to the first drying zone.

5. The method according to any of the previous claims, wherein the binder (4, 5) comprises an organic adhesive binder.

6. The method of claim 5, wherein the organic adhesive binder comprises a fluorine-based adhesive binder having a carboxylic acid group or a hydroxyl group.

7. The method of claim 6, wherein the fluorine-based adhesive binder having a carboxylic acid group or a hydroxyl group comprises a polyvinylidene fluoride (PVDF)-based binder having a carboxylic acid group or a hydroxyl group.

8. The method according to any of the previous claims, wherein the solvent comprises at least one of acetone, ethyl alcohol, methyl ethyl ketone, ethyl isobutyl ketone, tetrahydrofuran, dimethylformaldehyde, cyclohexane, and a mixed solvent thereof; and/or wherein the solvent has a boiling point of 80 °C or lower.

9. The method according to any of the previous claims, wherein the filler (3) comprises alumina having an average particle diameter D50 of 0.5 µm or less, the average particle diameter D50 being determined by a laser diffraction method.

10. The method according to any of the previous claims, wherein the binder (4, 5) and the filler (3) are included in a weight ratio in a range of 1:10 to 1:50 in the composition for the coating layer (2).

11. The method of claim 10, wherein the solvent is included in an amount in a range of 100 parts by weight to 500 parts by weight with respect to 100 parts by weight of the binder (4, 5) in the composition for the coating layer (2).

12. A separator (30) for a rechargeable battery (100), the separator (30) comprising a porous substrate (1) and a coating layer (2) laminated on at least one surface of the porous substrate (1),
wherein the coating layer (2) includes a binder (4, 5) and a filler (3) and has an average pore size of more than 0 nm and 50 nm or less, and a membrane resistance of 1 Ω or less, wherein the average pore size is determined by a pore size analyzer using advanced capillary flow porometry and the membrane resistance is determined by electrochemical impedance spectroscopy (EIS) resistance, and wherein the separator (30) is preferably obtained by a method according to any of the previous method claims.

13. The separator (30) of claim 12, wherein:
the coating layer (2) has a surface roughness Ra of 0.15 µm or less, and
the separator (30) has an air permeability of 180 sec/100 cc or less, wherein the surface roughness Ra was determined by a using a microscope and the air permeability was determined by measuring the time (units: sec) taken for 100 cc of air to pass through the separator (30) using an air-permeability tester.

14. The separator (30) of claims 12 or 13, wherein:
the binder (4, 5) comprises a fluorine-based adhesive binder, and
the filler (3) comprises alumina having an average particle diameter D50 of 0.5 µm or less, the average particle diameter D50 being determined by a laser diffraction method.

15. A rechargeable battery (100) comprising:
a positive electrode (10);
a negative electrode (20); and
a separator (30) located between the positive electrode (10) and the negative electrode (20), wherein the separator (30) is configured according to any of claims 12 to 14.
